# EUROPEAN PATENT APPLICATION

(11) **EP 4 840 796 A1**
(43) Date of publication of application: **18.11.2026**
(21) Application number: 25818951.3
(22) Date of filing: 20.05.2025
(51) Int. Cl.: B65G 1/04

(54) **PICK-AND-PLACE DEVICE, ROBOT, WAREHOUSING SYSTEM AND PICK-AND-PLACE METHOD**

(30) Priority: 06.06.2024 CN 202410735842
(71) Applicant: Hai Robotics Co., Ltd., Shenzhen, Guangdong 518000 (CN)
(72) Inventor: ZHAN, Qingxin, Shenzhen, Guangdong 518000 (CN)
(74) Representative: Gulde & Partner
(86) International application number: PCT/CN2025/095903
(87) International publication number: WO 2025/251893

(57) **Abstract**

This application provides a retrieving or placing apparatus, a robot, a warehousing system, and a retrieving or placing method. The retrieving or placing apparatus is configured to retrieve or place a container. The retrieving or placing apparatus includes an apparatus body, a telescopic mechanism, and a hook mechanism. The telescopic mechanism is movably connected to the apparatus body. The hook mechanism is movably connected to the telescopic mechanism. The hook mechanism includes a mounting base, a first driving unit, and a hook member. The first driving unit is disposed on the mounting base, the hook member is rotatably connected to the mounting base, and the first driving unit is configured to drive the hook member to rotate relative to the mounting base, to cause the hook member to be docked with or separated from the container. The apparatus body includes a bearing surface. The bearing surface is configured to bear the container. When the hook member is docked with a docking slot of the container, a height of the hook member is higher than that of the bearing surface. When the hook member is separated from the docking slot of the container, the height of the hook member is lower than that of the bearing surface. In this way, an operation of retrieving or placing the container can be implemented, a structure of the retrieving or placing apparatus can be simplified, and a cost can be reduced.

## Description

### CROSS-REFERENCES

This application claims priority to Chinese Patent Application No. 202410735842.5, filed with the China National Intellectual Property Administration on June 6, 2024 and entitled "RETRIEVING OR PLACING APPARATUS, ROBOT, WAREHOUSING SYSTEM, AND RETRIEVING OR PLACING METHOD", which is incorporated herein by reference in its entirety.

### TECHNICAL FIELD

This application relates to the field of warehousing and logistics technologies, and in particular, to a retrieving or placing apparatus, a robot, a warehousing system, and a retrieving or placing method.

### BACKGROUND OF THE INVENTION

With the development of artificial intelligence and automated technologies, robots are widely used in the field of warehousing and logistics for retrieving or placing, transporting, and sorting goods. In a logistics system, racks are usually used to store goods. A robot with a corresponding function is docked with a rack, a conveyor line, or the like to retrieve and place the goods or complete a goods transportation task.

In the related art, a fork for retrieving or placing the goods is usually disposed on the robot. A mechanical hand that can extend and contract relative to a body of the robot toward a fixed orientation is usually disposed on the fork. The mechanical hand usually has a plurality of joints, a plurality of groups of transmission mechanisms, and a plurality of driving units, so that the mechanical hand can complete an operation of retrieving or placing a container.

However, currently, the fork on the robot has a complex structure, a heavy weight, and a high cost.

### SUMMARY OF THE INVENTION

This application provides a retrieving or placing apparatus, a robot, a warehousing system, and a retrieving or placing method, to at least partially resolve at least one of current technical problems of a complex structure, a heavy weight, and a high cost of a fork on the robot.

According to a first aspect, this application provides a retrieving or placing apparatus. The retrieving or placing apparatus is configured to retrieve and place a container. The retrieving or placing apparatus includes an apparatus body, a telescopic mechanism, and a hook mechanism. The telescopic mechanism is movably connected to the apparatus body, and the hook mechanism is movably connected to the telescopic mechanism.

The hook mechanism includes a mounting base, a first driving unit, and a hook member. The first driving unit is disposed on the mounting base. The hook member is movably connected to the mounting base. An outer side of the container has a docking slot. The first driving unit is configured to drive the hook member to move relative to the mounting base, to cause the hook member to be docked with or separated from the docking slot of the container.

The apparatus body includes a bearing surface. The bearing surface is configured to bear the container. When the hook member is docked with the docking slot of the container, a height of the hook member is higher than that of the bearing surface. When the hook member is separated from the docking slot of the container, the height of the hook member is lower than that of the bearing surface.

According to the retrieving or placing apparatus provided in this application, a movable hook mechanism is disposed on the telescopic mechanism. When being opposite to the container, the hook mechanism is docked with the container by using a rotatable hook member on the hook mechanism, to drive the container to move when the telescopic mechanism and the hook mechanism move, thereby implementing a retrieving or placing operation of the container.

In an optional implementation, at least one end of a bottom of the container has the docking slot; and the hook member is rotatably connected to the mounting base, and when the hook member is rotated to be docked with the container, the hook member is at least partially inserted into the docking slot.

Through such arrangement, reliability of docking between the hook member and the container can be improved, thereby preventing the hook member from disengaging when the container is dragged to move.

In an optional implementation, a rotation plane of the hook member may be parallel to an extension direction of the docking slot.

Through such arrangement, when the hook mechanism is opposite to the docking slot and the hook member is rotated, the hook member can be prevented from interfering with a bottom wall of the container.

In an optional implementation, the first driving unit has an output shaft, and the hook member is connected to the output shaft.

Through such arrangement, direct driving can be performed on the hook member by using the first driving unit, thereby simplifying a structure of the hook mechanism, and reducing a product cost.

In an optional implementation, there are at least two hook members and at least two first driving units; and the hook members are disposed in one-to-one correspondence with the first driving units.

In this way, when the container is retrieved and placed, the at least two hook members may be simultaneously docked with the container, thereby improving stability of movement of the container.

In an optional implementation, the hook mechanism may further include a link member; the hook member is rotatably connected to the mounting base through a rotary shaft; a first end of the link member is connected to the first driving unit, and a second end of the link member is connected to the hook member; and the second end of the link member and a rotation center of the hook member are spaced apart.

Through such arrangement, rotation of the hook member may be driven by an activity of the link member, thereby improving smoothness of the rotation of the hook member.

In an optional implementation, the first driving unit has an output shaft, a driving member is connected to the output shaft, the first end of the link member is connected to the driving member, and the first end of the link member and a rotation center of the output shaft are spaced apart.

In this way, the hook member, the link member, and the driving member may jointly form a link mechanism, to facilitate design of an arrangement position of the first driving unit.

In an optional implementation, the link member may include a link body and a bending portion connected to the link body, the link body is connected to the hook member, and the bending portion is connected to the driving member.

Through such arrangement, when the driving member is rotated, the link member can be prevented from interfering with a rotary shaft of the driving member, and a rotation angle range of the driving member can be increased.

In an optional implementation, two hook members and two link members are provided, the two hook members are located at two ends of the mounting base, and the driving member is located between the two hook members; and positions of connections between the two link members and the driving member are respectively located on two opposite sides of the output shaft.

Through such arrangement, the two hook members may be linked by using a single driving unit, thereby reducing the cost.

In an optional implementation, the retrieving or placing apparatus may further include a second driving unit and a driving wheel; the telescopic mechanism may include a telescopic member, a transmission member, and at least two transmission wheels, the at least two transmission wheels are respectively disposed at two ends of the telescopic member in a first direction, and the transmission member winds around the transmission wheel; and the hook mechanism is connected to the transmission member.

The second driving unit is disposed in the apparatus body, the second driving unit is configured to drive the driving wheel to rotate, and the driving wheel cooperates with the transmission member and drives the transmission member to transmit around the transmission wheel, to cause the hook mechanism to move relative to the telescopic member.

Through such arrangement, bidirectionally telescopic retrieving or placing of the telescopic mechanism can be implemented by using the second driving unit.

In an optional implementation, the transmission member forms a closed loop around the at least two transmission wheels; and the driving wheel is located on an inner side of the transmission member, and is engaged with the transmission member.

Through such arrangement, layout compactness of the components of the apparatus body can be improved, and space occupation can be reduced.

In an optional implementation, the telescopic member is slidably connected to the apparatus body; an abutment member is disposed at each of the two ends of the telescopic member in the first direction; and the driving wheel drives the telescopic mechanism to move relative to the apparatus body when the hook mechanism is moved to any one of the two ends of the telescopic member in the first direction and is abutted against the abutment member.

Through such arrangement, when the hook mechanism is moved to the two ends of the telescopic mechanism, the hook mechanism and the telescopic mechanism are relatively fixed in position and extend out together.

In an optional implementation, a first guide rail may be disposed on the apparatus body, a first slide block is connected to the telescopic member, and the first slide block is slidably connected to the first guide rail; and/or
a second guide rail is disposed on the telescopic member, a second slide block is connected to the mounting base, and the second slide block is slidably connected to the second guide rail.

Through such arrangement, smoothness of movement of the telescopic member relative to the apparatus body can be improved, and smoothness of movement of the hook mechanism relative to the telescopic mechanism can be improved.

In an optional implementation, the retrieving or placing apparatus may further include an elastic member and at least two hanging shafts, a first hanging portion is disposed at each of two ends of the apparatus body in the first direction, and the at least two hanging shafts are respectively located at the two ends of the apparatus body, and the hanging shaft is abutted against the first hanging portion at a same end; two ends of the elastic member are respectively connected to the hanging shafts at the two ends of the apparatus body; and the hanging shaft is disposed for blocking at an end portion of the telescopic member.

Through such arrangement, when the hook mechanism is moved between the two ends of the telescopic mechanism, the position of the telescopic mechanism may be limited by using the hanging shaft, to prevent the telescopic mechanism from being offset relative to the apparatus body.

In an optional implementation, the telescopic member is a tension spring, a second hanging portion is disposed at each of the two ends of the telescopic member in the first direction, and the at least two hanging shafts are respectively located at the two ends of the telescopic member; and when the telescopic member extends out relative to the apparatus body, the hanging shaft located at an extending end of the telescopic member is abutted against the second hanging portion, and the hanging shaft located at an end facing away from the extending end of the telescopic member is abutted against the first hanging portion.

In an optional implementation, the telescopic member is a compression spring, a second hanging portion is disposed at each of the two ends of the telescopic member in the first direction, and the at least two hanging shafts are respectively located at the two ends of the telescopic member; and when the telescopic member extends out relative to the apparatus body, the hanging shaft located at an end facing away from an extending end of the telescopic member is abutted against the second hanging portion, and the hanging shaft located at the extending end of the telescopic member is abutted against the first hanging portion.

Through such arrangement, when the hook mechanism is moved to the end portion of the telescopic mechanism and synchronously extends and retracts with the telescopic mechanism, the hook mechanism and the telescopic mechanism may be maintained in an abutted state.

In an optional implementation, the hook mechanism may further include a detection unit, where the detection unit is connected to the mounting base; and the detection unit is configured to detect a relative position of the hook mechanism and the container.

Through such arrangement, accuracy of a position of docking between the hook member and the container can be ensured.

According to a second aspect, this application provides a robot. The robot includes a robot body and the retrieving or placing apparatus in the above technical solution. The retrieving or placing apparatus is disposed in the robot body, and the retrieving or placing apparatus can be moved up and down in a height direction of the robot body.

According to a third aspect, this application provides a retrieving method applied to a robot, where the robot includes a retrieving or placing apparatus, the retrieving or placing apparatus includes an apparatus body, a telescopic mechanism, and a hook mechanism, and the hook mechanism is movably connected to the telescopic mechanism; the hook mechanism includes a mounting base, a first driving unit, and a hook member, the hook member is movably connected to the mounting base, and the first driving unit is configured to drive the hook member to move relative to the mounting base; and The apparatus body includes a bearing surface. The bearing surface is configured to bear the container. When the hook member is docked with the docking slot of the container, a height of the hook member is higher than that of the bearing surface. When the hook member is separated from the docking slot of the container, the height of the hook member is lower than that of the bearing surface.

The retrieving method includes:
receiving a retrieving instruction, and driving the hook mechanism to move to a first end of the telescopic mechanism, to cause the hook mechanism to push the telescopic mechanism to extend out to below a target container;
determining that the hook mechanism is opposite to a docking slot of the target container, and driving the hook member to move to be docked with the docking slot, where the docking slot is located on a bottom side of an end portion of the target container; and
driving the hook mechanism in a reverse direction, to drive the target container to the retrieving or placing apparatus.

In an optional implementation, the hook mechanism may further include a detection unit.

In an optional implementation, the determining that the hook mechanism is opposite to a docking slot of the target container specifically includes:
determining that the hook mechanism is opposite to the docking slot when the detection unit detects the docking slot.

In an optional implementation, the driving the hook mechanism in a reverse direction, to drive the target container to the retrieving or placing apparatus includes:
driving the hook mechanism and the telescopic mechanism to retract synchronously, to drive a part of the target container to the retrieving or placing apparatus; and
driving the hook mechanism to move from the first end of the telescopic mechanism to a second end of the telescopic mechanism, to drive the entire target container to the retrieving or placing apparatus.

According to a fourth aspect, this application provides a placing method applied to a robot, where the robot includes a retrieving or placing apparatus, the retrieving or placing apparatus includes an apparatus body, a telescopic mechanism, and a hook mechanism, and the hook mechanism is movably connected to the telescopic mechanism; the hook mechanism includes a mounting base, a first driving unit, and a hook member, the first driving unit is disposed on the mounting base, the hook member is movably connected to the mounting base, and the first driving unit is configured to drive the hook member to move relative to the mounting base; and the apparatus body includes a bearing surface, the bearing surface is configured to bear a container, a height of the hook member is higher than that of the bearing surface when the hook member is docked with a docking slot of the container, and the height of the hook member is lower than that of the bearing surface when the hook member is separated from the docking slot of the container;
receiving a placing instruction, controlling the robot to travel to a target placing position with a target container, where the hook mechanism is docked with a docking slot at a bottom of a second end of the target container; driving the hook mechanism toward the target placing position, where the hook mechanism is moved from a second end of the telescopic mechanism to a first end of the telescopic mechanism, and pushing the telescopic mechanism to extend out synchronously, to drive the target container to the target placing position; and
driving the hook member to move to be separated from the docking slot of the target container; and driving the hook mechanism in a reverse direction, to cause the hook mechanism and the telescopic mechanism to retract into the retrieving or placing apparatus.

In an optional implementation, the controlling the robot to travel to a target placing position with a target container, where the hook mechanism is docked with a docking slot at a bottom of a second end of the target container includes:
controlling the robot to move to the target placing position, moving the hook mechanism to the second end of the telescopic mechanism if a placing direction of the target container and a retrieving direction of the target container are on different sides of the retrieving or placing apparatus, and driving the hook member to move to be docked with the docking slot at the bottom of the second end of the target container.

An embodiment of this application provides a warehousing system, including a rack and a robot. The robot may retrieve a container from the rack and place a container on the rack, and the robot is configured to perform the retrieving method or the placing method.

This application provides a retrieving or placing apparatus, a robot, a warehousing system, and a retrieving or placing method. The retrieving or placing apparatus is configured to retrieve and place a container. The retrieving or placing apparatus includes an apparatus body, a telescopic mechanism, and a hook mechanism. The telescopic mechanism is movably connected to the apparatus body. The hook mechanism is movably connected to the telescopic mechanism. The hook mechanism includes a mounting base, a first driving unit, and a hook member. The first driving unit is disposed on the mounting base, the hook member is movably connected to the mounting base, an outer side of the container has a docking slot, and the first driving unit is configured to drive the hook member to move relative to the mounting base, to cause the hook member to be docked with or separated from the docking slot of the container. In this way, the container can be driven to move when the telescopic mechanism and the hook mechanism move, to implement an operation of retrieving or placing the container, thereby simplifying a structure of the retrieving or placing apparatus, and reducing a cost.

In addition to the technical problems resolved through the embodiments of this application described above, the technical features constituting the technical solutions, and the beneficial effects brought about by the technical features of these technical solutions, other technical problems that can be resolved through the retrieving or placing apparatus, the robot, the warehousing system, and the retrieving or placing method provided in the embodiments of this application, other technical features included in the technical solutions, and the beneficial effects brought about by these technical features are to be further described in detail in specific implementations.

### BRIEF DESCRIPTION OF DRAWINGS

To describe the technical solutions in embodiments of this application or in the related art more clearly, the following briefly describes the accompanying drawings required for describing the embodiments or the related art. It is clear that, the accompanying drawings in the following descriptions show some embodiments of this application, and a person of ordinary skill in the art may further obtain other accompanying drawings from these accompanying drawings without creative efforts.
FIG. 1 is a schematic diagram of a structure of a retrieving or placing apparatus according to an embodiment of this application;
FIG. 2 is a top view of a retrieving or placing apparatus according to an embodiment of this application;
FIG. 3 is a schematic diagram of a structure of a hook mechanism in a retrieving or placing apparatus according to an embodiment of this application;
FIG. 4 is a schematic diagram of a structure of a container retrieved and placed by a retrieving or placing apparatus according to an embodiment of this application;
FIG. 5 is a schematic diagram of docking between a hook member of a retrieving or placing apparatus and a container according to an embodiment of this application;
FIG. 6 is a schematic diagram of separation between a hook member of a retrieving or placing apparatus and a container according to an embodiment of this application;
FIG. 7 is a schematic diagram of a first driving structure of a hook mechanism in a retrieving or placing apparatus according to an embodiment of this application;
FIG. 8 is a schematic diagram of a second driving structure of a hook mechanism in a retrieving or placing apparatus according to an embodiment of this application;
FIG. 9 is a front view of a second driving structure of a hook mechanism in a retrieving or placing apparatus according to an embodiment of this application;
FIG. 10 is a schematic diagram of a structure of a link member in a retrieving or placing apparatus according to an embodiment of this application;
FIG. 11 is a schematic diagram of a structure of a telescopic mechanism in a retrieving or placing apparatus according to an embodiment of this application;
FIG. 12 is a front view of a retrieving or placing apparatus according to an embodiment of this application;
FIG. 13 is a schematic diagram 1 of transmission of a telescopic mechanism in a retrieving or placing apparatus according to an embodiment of this application;
FIG. 14 is a schematic diagram 2 of transmission of a telescopic mechanism in a retrieving or placing apparatus according to an embodiment of this application;
FIG. 15 is a partial view of a position A in FIG. 12;
FIG. 16 is a schematic diagram of a connection between a transmission member and a mounting base in a retrieving or placing apparatus according to an embodiment of this application;
FIG. 17 is a schematic diagram of a bottom side of a retrieving or placing apparatus according to an embodiment of this application;
FIG. 18 is a schematic diagram of an apparatus body of a retrieving or placing apparatus according to an embodiment of this application;
FIG. 19 is a schematic diagram of a robot according to an embodiment of this application;
FIG. 20 is a schematic diagram of a retrieving process of a retrieving or placing apparatus according to an embodiment of this application;
FIG. 21 is a flowchart of a retrieving method according to an embodiment of this application; and
FIG. 22 is a flowchart of a placing method according to an embodiment of this application.

### Description of the reference numerals:

1: robot;
10: retrieving or placing apparatus;
100: apparatus body; 101: bearing surface; 110: first guide rail; 120: first hanging portion;
200: telescopic mechanism; 210: telescopic member; 211: second hanging portion; 220: transmission member; 230: transmission wheel; 240: abutment member; 250: first slide block; 260: second guide rail;
300: hook mechanism; 310: mounting base; 320: first driving unit; 321: output shaft; 330: hook member; 340: link member; 341: link body; 342: bending portion; 350: driving member; 360: connecting member; 370: second slide block; 380: detection unit;
400: second driving unit; 410: driving wheel;
500: hanging shaft; 510: elastic member;
20: container; 21: docking slot; and
30: robot body.

### DETAILED DESCRIPTION

To make the objectives, technical solutions, and advantages of embodiments of this application clearer, the technical solutions in embodiments of this application are clearly and completely described below with reference to the accompanying drawings in the embodiments of this application. It is clear that the described embodiments are some rather than all of the embodiments of this application. Based on the embodiments of this application, all other embodiments obtained by a person of ordinary skill in the art without creative efforts shall fall within the protection scope of this application.

First, a person skilled in the art should understand that the implementations are merely used for explaining the technical principles of this application, and are not intended to limit the protection scope of this application. A person skilled in the art may adjust the implementations as desired, so as to adapt to a specific application scenario.

Second, it should be noted that, in the descriptions of this application, terms such as "upper", "lower", "left", "right", "front", "back", "inner", and "outer" that indicate directions or position relationships are based on directions or position relationships shown in the accompanying drawings. This is merely for ease of description, and does not indicate or imply that an apparatus or member needs to have a specific orientation, and is constructed and operated in a specific orientation. Therefore, this should not be understood as a limitation on this application.

In the descriptions of this specification, the descriptions of the reference terms such as "an embodiment", "some embodiments", "exemplary embodiments", "an example", "a specific example", or "some examples" mean that the specific features, structures, materials, or characteristics described with reference to the embodiment or example are included in at least one embodiment or example of the present disclosure. In this specification, schematic descriptions of the foregoing terms do not necessarily refer to a same embodiment or example. In addition, the described specific features, structures, materials, or characteristics may be combined in a proper manner in any one or more of the embodiments or examples.

In this application, terms "mounting" or "connection" may be used interchangeably. "connection" may be a direct connection or an indirect connection through an intermediate member; or "connection" may be an active connection or a fixed connection. The term "and/or" includes any combination of the listed items. For example, "A and/or B" includes three cases: "A and B", "only A", or "only B".

Various types of robots are widely used in various fields such as industry and daily life. The robot plays an important role in industries such as transportation and logistics. In a warehousing and logistics system, goods are usually stored by using a rack, and the robot may retrieve and place the goods by being docked with the rack or a conveyor line, and may transport the goods. A fork for retrieving or placing goods is usually disposed on a robot for retrieving or placing goods. A mechanical hand that can extend out relative to a body of the robot toward a fixed orientation is usually disposed on the fork. The whole fork may rotate relative to the body of the robot. The mechanical hand usually completes an operation of retrieving or placing goods on a side of the robot in a forward direction. Therefore, when the robot completes a task to retrieve or place goods on racks from different sides, the fork needs to be rotated to reverse an orientation of the fork.

Therefore, in the related art, when executing a goods transportation task, and when performing the retrieving or placing operation from different sides of a transport robot, the robot first needs to rotate a position of the fork, so that the fork faces a target rack, and then a telescopic operation can be performed to retrieve and place the goods. Consequently, efficiency of retrieving or placing by the robot is low. The fork usually has a plurality of joints, a plurality of groups of transmission mechanisms, and a plurality of driving units. The mechanical hand can complete an operation of retrieving or placing a container. The fork on the robot has a complex structure, a heavy weight, and a high cost.

In addition, when the fork of the robot retrieves and places the container, the joints of the fork need to extend into a storage location of the rack, which occupies storage space inside the storage location. Consequently, warehouse density is reduced, and overall space utilization of the warehousing system is reduced.

In view of the foregoing problem, the embodiments of this application provide a retrieving or placing apparatus, a robot, a warehousing system, and a retrieving or placing method. By designing structures of the telescopic mechanism and the hook mechanism on the retrieving or placing apparatus, a fork apparatus can extend and retract, both backward and forward. The hook mechanism does not need to extend into the storage location of the rack when docked with the container, thereby improving space utilization and warehouse efficiency. The structure of the retrieving or placing apparatus is simplified, a weight of equipment is reduced, and the product cost is reduced.

For ease of understanding, first, application scenarios of the retrieving or placing apparatus, the robot, the warehousing system, and the retrieving or placing method provided in the embodiments of this application are described.

The retrieving or placing apparatus provided in this application is used in the robot. The robot may be used in the warehousing system or a logistics system, and is configured to retrieve and place goods. Specifically, the robot may be used in different fields such as logistics delivery of an industrial production line, outbound and inbound of a manufactured inventory product, outbound and inbound of a retail product, or outbound and inbound of an express product of e-commerce logistics, and a product or goods related to transportation may be an industrial part, an electronic accessory or product, medicine, a clothing accessory, food, a book, or the like. The robot may directly transfer the goods, or may transfer a container filled with the goods. This is not specifically limited in this application. A "container" is used to refer to a to-be-transported object of the transport robot below, and is not specifically used as an example. In an embodiment, the robot may walk on the ground. In another embodiment, the robot may alternatively climb onto the rack to retrieve and place the goods. In some other embodiments, the robot may alternatively walk on a guide rail disposed on the rack.

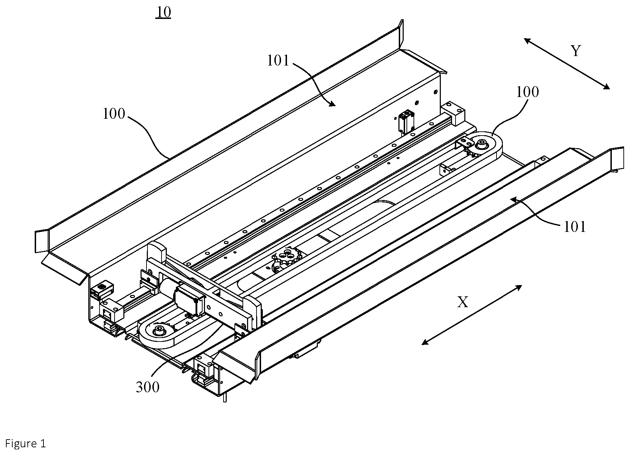

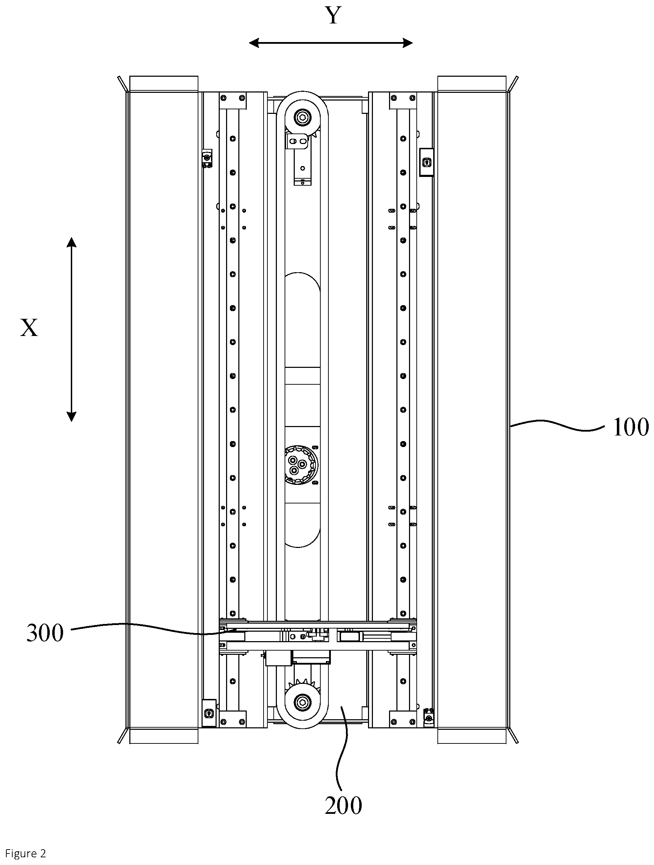

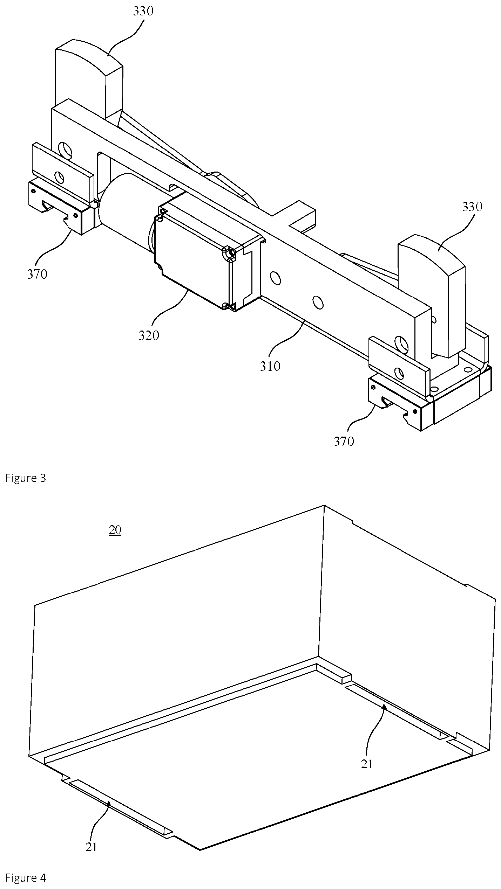

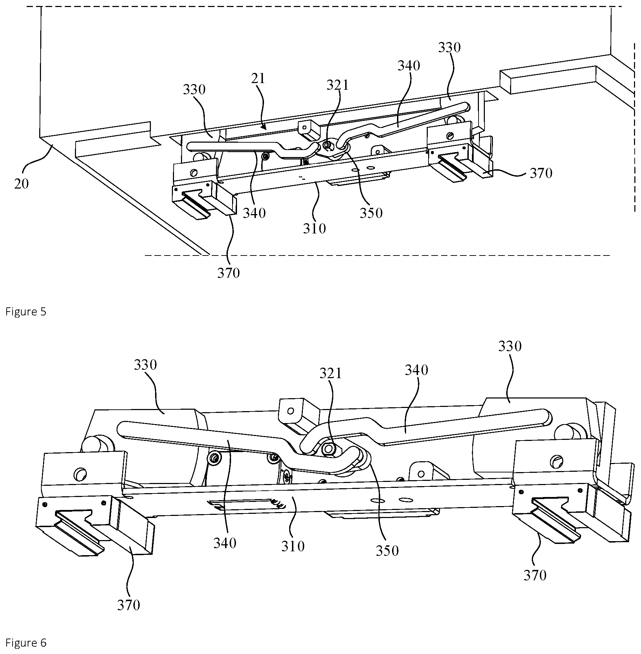

FIG. 1 is a schematic diagram of a structure of a retrieving or placing apparatus according to an embodiment of this application. FIG. 2 is a top view of a retrieving or placing apparatus according to an embodiment of this application. FIG. 3 is a schematic diagram of a structure of a hook mechanism in a retrieving or placing apparatus according to an embodiment of this application. FIG. 4 is a schematic diagram of a structure of a container retrieved and placed by a retrieving or placing apparatus according to an embodiment of this application. FIG. 5 is a schematic diagram of docking between a hook member of a retrieving or placing apparatus and a container according to an embodiment of this application. FIG. 6 is a schematic diagram of separation between a hook member of a retrieving or placing apparatus and a container according to an embodiment of this application.

As shown in FIG. 1 to FIG. 6, an embodiment of this application provides a retrieving or placing apparatus 10. The retrieving or placing apparatus 10 is configured to retrieve and place a container 20. The retrieving or placing apparatus 10 may be used in a robot in a warehousing and logistics system. The retrieving or placing apparatus 10 retrieves the container 20 from a rack, or places the container 20 on a rack. The rack may include one or more shelves for placing the container 20, and the shelves are provided with a plurality of storage locations for placing the container 20. Shapes and structures of the shelves and the storage locations are not limited in this application, provided that the container 20 can be placed at the storage location of the shelf.

The retrieving or placing apparatus 10 includes an apparatus body 100, a telescopic mechanism 200, and a hook mechanism 300. The telescopic mechanism 200 is movably connected to the apparatus body 100, and the hook mechanism 300 is movably connected to the telescopic mechanism 200. When a retrieving or placing operation is performed, the hook mechanism 300 may be moved relative to the telescopic mechanism 200, the telescopic mechanism 200 and the apparatus body 100 have relatively fixed positions, or the hook mechanism 300 and the telescopic mechanism 200 may be moved relative to the apparatus body 100 together. In this way, the telescopic mechanism 200 may extend, and the hook mechanism 300 may completely drive the container 20 to the retrieving or placing apparatus 10.

The hook mechanism 300 includes a mounting base 310, a first driving unit 320, and a hook member 330. The first driving unit 320 is disposed on the mounting base 310, and the hook member 330 is movably connected to the mounting base 310. An outer side of the container 20 has a docking slot 21. The first driving unit 320 is configured to drive the hook member 330 to move relative to the mounting base 310, which includes, but is not limited to, rotating or extending and retracting relative to the mounting base 310, so that the hook member 330 is docked with or separated from the docking slot 21 of the container 20.

The apparatus body 100 includes a bearing surface 101. The bearing surface 101 is configured to bear the container 20. When the hook member 330 is docked with the docking slot 21 of the container 20, a height of the hook member 330 is higher than that of the bearing surface 101. When the hook member 330 is separated from the docking slot 21 of the container 20, the height of the hook member 330 is lower than that of the bearing surface 101.

It may be understood that, the first driving unit 320 may drive the hook member 330 to rotate, so that the hook member 330 has different position postures relative to the mounting base 310.

Using a retrieving process as an example, the telescopic mechanism 200 needs to be extended first, and the hook mechanism 300 and the container 20 are at a preset relative position for docking. Therefore, before the hook mechanism 300 reaches the preset position relative to the container 20, the hook member 330 of the hook mechanism 300 may be in a stowed state relative to the mounting base 310 (in this case, the height of the hook member 330 is lower than that of the bearing surface 101). After the hook mechanism 300 reaches the preset position, the first driving unit 320 may drive the hook member 330 to rotate, so that the hook member 330 extends out relative to the mounting base 310 (in this case, the height of the hook member 330 is higher than that of the bearing surface 101), and the hook member 330 is docked with the container 20. Subsequently, as the telescopic mechanism 200 retracts, the hook member 330 may drive the container 20 to move, to obtain the container 20.

In a placing process, the hook member 330 is docked with the container 20. Through movement of the hook mechanism 300 and the telescopic mechanism 200, the container 20 is driven to move from the apparatus body 100 to the rack. After placing is completed, the hook member 330 is rotated from the extended state to the stowed state relative to the mounting base 310 under driving of the first driving unit 320, so that the hook member 330 is separated from the container 20, and the telescopic mechanism 200 may retract.

It should be noted that, in the retrieving or placing apparatus 10 provided in this embodiment of this application, a movable hook mechanism 300 is disposed on the telescopic mechanism 200. When the hook mechanism 300 and the container 20 are at the preset position for docking, the hook mechanism 300 is docked with a docking structure of the container 20 that is on an outer side of the rack by using a rotatable hook member 330 on the hook mechanism 300, to drive the container 20 to move when the telescopic mechanism 200 and the hook mechanism 300 are moved, thereby implementing a retrieving or placing operation performed on the container 20. The hook mechanism 300 does not need to extend to a deep interior of the storage location when docked with the container 20, thereby avoiding occupying space inside the storage location. It is beneficial to reduce a width of the storage location of the rack, and improve warehouse density of the rack. In addition, the rotatable hook member 330 is used to cooperate with the container 20, so that the retrieving or placing apparatus 10 does not need to be entirely lifted to cooperate with the container 20, thereby simplifying the retrieving or placing process, simplifying an entire structure of the retrieving or placing apparatus 10, reducing a weight of the retrieving or placing apparatus 10, and reducing a production cost.

A specific docking manner of the hook member 330 and the container 20 is described first in detail below.

Still refer to FIG. 1 to FIG. 6. In a possible implementation, a bottom of the container 20 has the docking slot 21, and the hook member 330 is rotatably connected to the mounting base 310. When the hook member 330 is rotated to be docked with the container 20, the hook member 330 is at least partially inserted into the docking slot 21. When the hook member 330 drags the container 20 to move, the hook member 330 is abutted against a slot wall of the docking slot 21, thereby improving reliability when the hook member 330 is abutted against the container 20, and preventing the hook member 330 from disengaging when the container 20 is dragged to move.

It may be understood that the hook member 330 may have a rod-like structure or a sheet-like structure. A diameter or a thickness of the hook member 330 may be slightly smaller than a width of the docking slot 21, to prevent the hook member 330 from interfering with an outer wall of the container 20 when the hook member 330 is rotated and inserted into the docking slot 21.

For example, the hook member 330 has a sheet-like structure, that is, a length and a width of the hook member 330 are greater than the thickness of the hook member 330. A rotational connection point of the hook member 330 relative to the mounting base 310 may be eccentrically disposed relative to a center or a center of gravity of the hook member 330, thereby ensuring that the hook member 330 can be docked with the docking slot 21 of the container 20, and reducing space occupation in a rotation travel process of the hook member 330.

For example, a material of the hook member 330 may be plastic, a metal like iron or aluminum, or an alloy. This is not specifically limited in this embodiment of this application.

In some embodiments, a rotation plane of the hook member 330 may be parallel to an extension direction of the docking slot 21. When the hook mechanism 300 is opposite to the docking slot 21, and the hook member 330 is rotated, the hook member 330 may be prevented from interfering with a bottom wall of the container 20.

It may be understood that, the docking slot 21 may extend in a width direction of the container 20. For example, the extension direction of the docking slot 21 may be perpendicular to a retrieving or placing direction of the retrieving or placing apparatus 10. A slot opening of the docking slot 21 may be provided downward. When the hook mechanism 300 is opposite to the docking slot 21, the hook member 330 is located below the docking slot 21. When the hook member 330 needs to be docked with the docking slot 21, the first driving unit 320 may drive the hook member 330 to deflect upward.

For example, the hook member 330 may be disposed at two ends of the mounting base 310, the rotation plane of the hook member 330 is a vertical plane, and an X-direction may be perpendicular to the vertical plane. The rotation plane of the hook member 330 may be perpendicular to the retrieving or placing direction of the retrieving or placing apparatus 10. When the hook member 330 is separated from the docking slot 21 of the container 20, the hook member 330 is stowed relative to the mounting base 310. In this case, the hook member 330 is accommodated on a side of the mounting base 310, and the height of the hook member 330 is lower than that of a top surface of the mounting base 310. When the hook member 330 is docked with the docking slot 21 of the container 20, the hook member 330 may extend out relative to the mounting base 310. In this case, the height of the hook member 330 is higher than that of the top surface of the mounting base 310.

For example, in some implementations, the docking slot 21 may be provided on the bottom wall of the container 20, or the docking slot 21 may be formed by a handle on a side of the container 20. A specific position for providing the docking slot 21 is not limited in this embodiment of this application. For example, the docking slot 21 may be provided at a top of the container 20 toward a side wall of the retrieving or placing apparatus 10, and the slot opening of the docking slot 21 is provided upward. When the hook mechanism 300 is aligned with the docking slot 21, the hook member 330 is located above the docking slot 21. When the hook member 330 needs to be docked with the docking slot 21, the first driving unit 320 may drive the hook member 330 to deflect downward.

In some embodiments, at least one end of the bottom of the container 20 is provided with the docking slot 21. For example, one docking slot 21 may be provided at only one end of the bottom of the container 20, or two opposite ends of the bottom of the container 20 may each be provided with one docking slot 21, as shown in FIG. 4.

It should be noted that, when the hook member 330 is opposite to the docking slot 21 of the container 20, because the hook member 330 does not interfere with the container 20 in a rotation process, when the hook mechanism 300 extends to below the container 20, the hook mechanism 300 may be close to the bottom wall of the container 20 as much as possible, thereby avoiding that the hook mechanism 300 and the telescopic mechanism 200 occupy too much space below the storage location at which the target container 20 is located, thereby helping reduce a shelf height of the rack storage location and improving warehouse density.

In this embodiment of this application, the first driving unit 320 may drive the hook member 330 in a direct driving manner or an indirect driving manner, which are separately described in detail below.

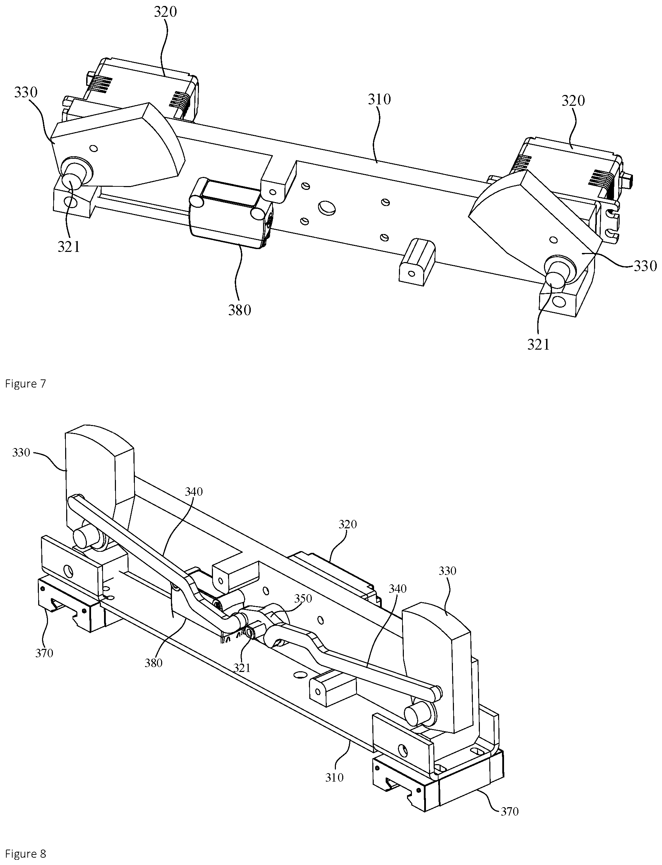

FIG. 7 is a schematic diagram of a first driving structure of a hook mechanism in a retrieving or placing apparatus according to an embodiment of this application.

Refer to FIG. 7. With reference to FIG. 1, FIG. 2, and FIG. 4, in a possible implementation, the first driving unit 320 has an output shaft 321, and the hook member 330 is connected to the output shaft 321, so that the first driving unit 320 may perform direct driving on the hook member 330, thereby simplifying a structure of the hook mechanism 300 and reducing a product cost.

For example, the first driving unit 320 may be a motor, an electromagnet, or the like. The first driving unit 320 and the hook member 330 may be respectively disposed on two opposite sides of the mounting base 310. The hook member 330 may be directly connected to the output shaft 321, or the hook member 330 may be connected to the output shaft 321 through a rotary shaft and a coupling. This is not specifically limited in this embodiment of this application.

In some embodiments, there are at least two hook members 330, and at least two first driving units 320. The hook members 330 are disposed in one-to-one correspondence with the first driving units 320. When the container 20 is retrieved and placed, the at least two hook members 330 may be simultaneously docked with the container 20, thereby improving stability of movement of the container 20.

For example, there may be two first driving units 320, and there may be two hook members 330. The two first driving units 320 are respectively correspondingly connected to the two hook members 330, and directions in which the two first driving units 320 drive the two hook members 330 to rotate are opposite. In this way, when the two hook members 330 are stowed relative to the mounting base 310, the two hook members 330 may be accommodated at an inner side of the mounting base 310, thereby avoiding that the hook member 330 occupies space on an outer side of an end portion of the mounting base 310.

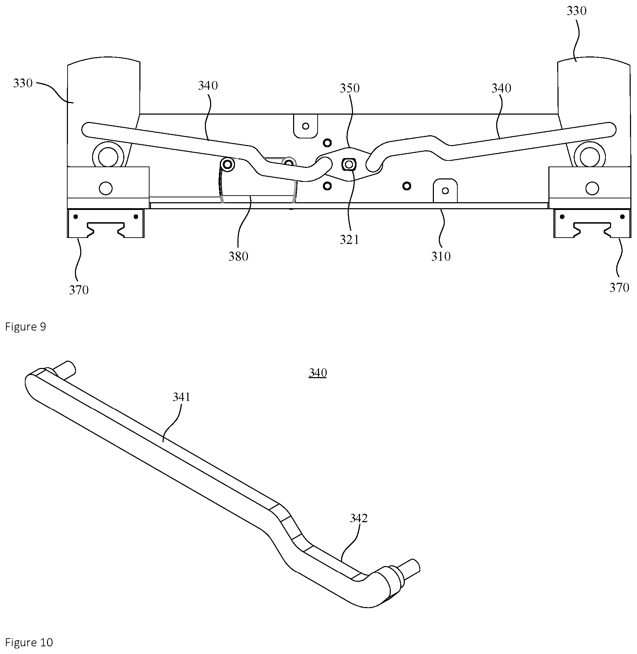

FIG. 8 is a schematic diagram of a second driving structure of a hook mechanism in a retrieving or placing apparatus according to an embodiment of this application. FIG. 9 is a front view of a second driving structure of a hook mechanism in a retrieving or placing apparatus according to an embodiment of this application. FIG. 10 is a schematic diagram of a structure of a link member in a retrieving or placing apparatus according to an embodiment of this application.

Refer to FIG. 8 to FIG. 10. With reference to FIG. 1 to FIG. 6, in a possible implementation, the hook mechanism 300 may further include a link member 340. The hook member 330 is rotatably connected to the mounting base 310 by using the rotary shaft, a first end of the link member 340 is connected to the first driving unit 320, and a second end of the link member 340 is connected to the hook member 330. The second end of the link member 340 and a rotation center of the hook member 330 are spaced apart. When driving the link member 340, the first driving unit 320 may drive, through activity of the link member 340, the hook member 330 to rotate, so that rotation consistency of the two hook members 330 can be maintained.

For example, the first end of the link member 340 is rotatably connected to the first driving unit 320. For example, the rotary shaft is disposed on one of the link member 340 and the first driving unit 320, and a rotating shaft is disposed on the other one of the link member 340 and the first driving unit 320. The rotary shaft is inserted into a rotating shaft hole. To improve rotation smoothness, a bearing may be disposed between the rotary shaft and the rotating shaft hole. The second end of the link member 340 is rotatably connected to the hook member 330. The link member 340 and the hook member 330 may also use a connection manner of the rotary shaft and the rotating shaft hole. Details are not described herein again.

The first driving unit 320 has the output shaft 321, a driving member 350 is connected to the output shaft 321, and the first end of the link member 340 is connected to the driving member 350. The first end of the link member 340 and a rotation center of the output shaft 321 are spaced apart.

It may be understood that the hook member 330, the link member 340, and the driving member 350 may jointly form a link mechanism, to facilitate designing an arrangement position of the first driving unit 320.

In some embodiments, the link member 340 may include a link body 341 and a bending portion 342 connected to the link body 341. The link body 341 is connected to the hook member 330, and the bending portion 342 is connected to the driving member 350, to prevent the link member 340 from interfering with a rotary shaft of the driving member 350 when the driving member 350 is rotated, and enlarge a rotation angle range of the driving member 350.

For example, the link body 341 may extend in a direction perpendicular to the X-direction, and the bending portion 342 is bent upward or downward relative to an extension direction of the link body 341, so that the link member 340 forms a spoon-shaped structure. When the driving member 350 is rotated to drive the link member 340 to move, and the bending portion 342 is located on a side of the output shaft 321, the bending portion 342 may avoid the output shaft 321, thereby preventing the bending portion 342 from interfering with the output shaft 321.

For example, the link body 341 and the bending portion 342 may be an integrally formed member. A material of the link member 340 may be plastic, metal, or the like. This is not specifically limited in this embodiment of this application.

In some embodiments, there may be two hook members 330 and two link members 340, the two hook members 330 are located at two ends of the mounting base 310, and the driving member 350 is located between the two hook members 330. Connection positions between the two link members 340 and the driving member 350 are respectively located on two opposite sides of the output shaft 321, so that the two hook members 330 can be linked by using a single driving unit, the cost is reduced, and rotation of the two hook members 330 can be consistent.

For example, a rotational connection point between the two link members 340 and the driving member 350 may be disposed to be collinear with a center of the output shaft 321, thereby improving balance of forces applied when the driving member 350 drives the two link members 340.

It should be noted that, when the two link members 340 are mounted to the hook mechanism 300, bending directions of the bending portions 342 of the two link members 340 may be opposite, so that when the two hook members 330 are stowed relative to the mounting base 310, the bending portions 342 of the two link members 340 may separately avoid the output shaft 321 upward and downward.

The following describes in detail a specific structure of the telescopic mechanism 200, and a movement manner of the hook mechanism 300 and the telescopic mechanism 200.

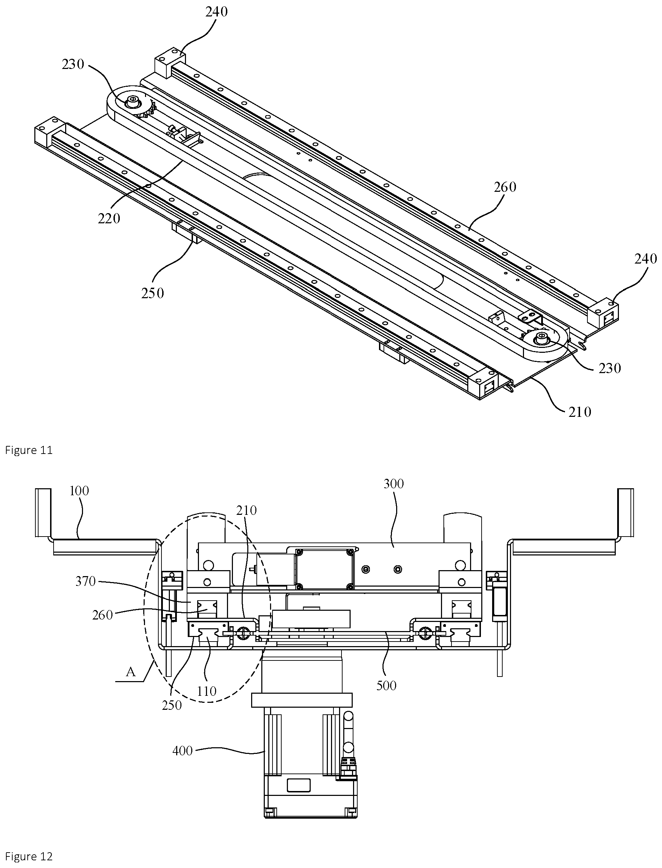

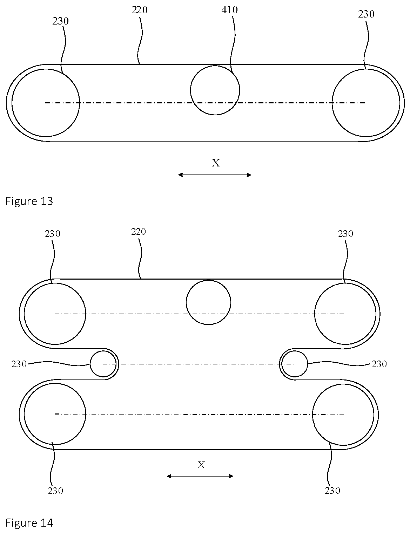

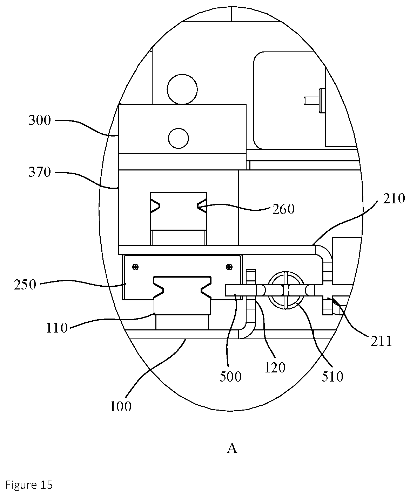

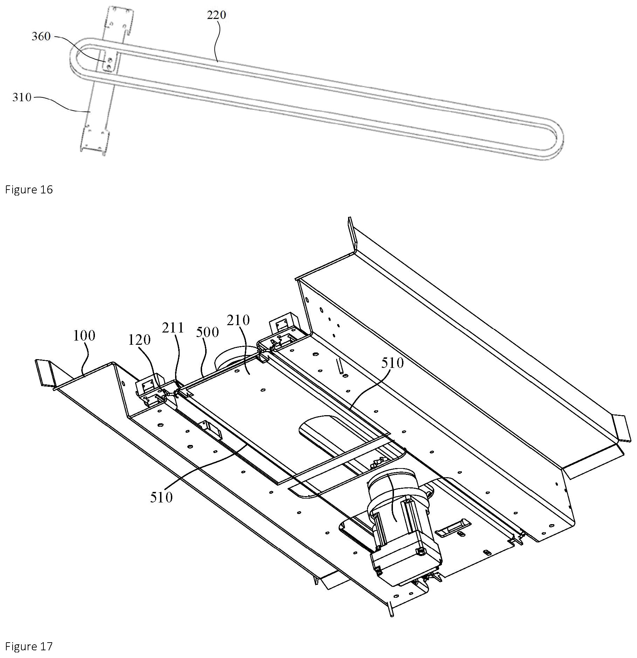

FIG. 11 is a schematic diagram of a structure of a telescopic mechanism in a retrieving or placing apparatus according to an embodiment of this application. FIG. 12 is a front view of a retrieving or placing apparatus according to an embodiment of this application. FIG. 13 is a schematic diagram 1 of transmission of a telescopic mechanism in a retrieving or placing apparatus according to an embodiment of this application. FIG. 14 is a schematic diagram 2 of transmission of a telescopic mechanism in a retrieving or placing apparatus according to an embodiment of this application. FIG. 15 is a partial view of a position A in FIG. 12. FIG. 16 is a schematic diagram of a connection between a transmission member and a mounting base in a retrieving or placing apparatus according to an embodiment of this application.

Refer to FIG. 11 to FIG. 16. With reference to FIG. 1 and FIG. 2, in a possible implementation, the retrieving or placing apparatus 10 may further include a second driving unit 400 and a driving wheel 410. The telescopic mechanism 200 may include a telescopic member 210, a transmission member 220, and at least two transmission wheels 230. The at least two transmission wheels 230 are respectively disposed at two ends of the telescopic member 210 in a first direction (the X-direction), and the transmission member 220 winds around the transmission wheel 230. The hook mechanism 300 is connected to the transmission member 220.

The second driving unit 400 is disposed in the apparatus body 100. The second driving unit 400 is configured to drive the driving wheel 410 to rotate. The driving wheel 410 cooperates with the transmission member 220 and drives the transmission member 220 to transmit around the transmission wheel 230. In a transmission process, the transmission member 220 may drive the hook mechanism 300 to move relative to the telescopic member 210.

It may be understood that when the hook mechanism 300 is moved between the two ends of the telescopic member 210, the transmission member 220 is driven around the transmission wheel 230. In this case, a position of the telescopic member 210 relative to the apparatus body 100 remains fixed. When the hook mechanism 300 is moved to the two ends of the telescopic member 210, as the driving wheel 410 continues to rotate, positions of the hook mechanism 300 and the telescopic member 210 remain fixed. In this case, the transmission member 220 is no longer driven around the transmission wheel 230, and the whole telescopic mechanism 200 extends and retracts relative to the apparatus body 100. In this way, bidirectionally telescopic retrieving or placing of the telescopic mechanism 200 can be implemented by using the second driving unit 400.

It may be learned from the above that the retrieving or placing apparatus 10 provided in the embodiments of this application drives the hook mechanism 300 to move relative to the telescopic member 210 by cooperating with the transmission member 220 by the driving wheel 410, so that the hook mechanism 300 may retrieve and place the container 20. In addition, the telescopic mechanism 200 may be driven by using the hook mechanism 300 to extend and retract bidirectionally relative to the apparatus body 100, so that the retrieving or placing apparatus 10 can also complete the retrieving operation in forward and backward directions without rotating, thereby reducing space occupied by the retrieving or placing apparatus 10, reducing spacing between the racks in the warehousing and logistics system, and increasing warehouse density.

A telescopic movement direction of the telescopic mechanism 200 relative to the apparatus body 100 is defined as the X-direction, that is, the first direction is the X-direction, and a movement direction of the hook mechanism 300 relative to the telescopic mechanism 200 is also the X-direction. A width direction of the retrieving or placing apparatus 10 is defined as a Y-direction, and the mounting base 310 of the hook mechanism 300 may extend in the Y-direction. The Y-direction is perpendicular to the X-direction.

A specific cooperation structure of the hook mechanism 300 and the telescopic mechanism 200 is described in detail below.

In some embodiments, the transmission member 220 forms a closed loop around the at least two transmission wheels 230. The driving wheel 410 is located on an inner side of the transmission member 220, and is engaged with the transmission member 220, thereby improving layout compactness of the components of the apparatus body 100, and reducing space occupation.

For example, the second driving unit 400 is a motor. The transmission member 220 may be a flexible transmission component. The transmission member 220 may be a flexible member like a belt or a chain. Correspondingly, the transmission wheel 230 may be a belt wheel, a chain wheel, or the like. This is not specifically limited in this embodiment of this application. Using the chain and the chain wheel as an example, the mounting base 310 of the hook mechanism 300 may be connected to the chain through a connecting member 360. The connecting member 360 may be riveted to the chain through a fastener like a screw, thereby ensuring reliability of a connection between the mounting base 310 and the transmission member 220.

In some embodiments, the telescopic member 210 is slidably connected to the apparatus body 100. An abutment member 240 is disposed at each of the two ends of the telescopic member 210 in the first direction. When the hook mechanism 300 is moved to any one of the two ends of the telescopic member 210 in the first direction, and is abutted against the abutment member 240, the driving wheel 410 drives the telescopic mechanism 200 to move relative to the apparatus body 100. In this way, when the hook mechanism 300 is moved to the two ends of the telescopic mechanism 200, the hook mechanism 300 and the telescopic mechanism 200 are relatively fixed in position and extend out together.

It may be understood that through transmission of the transmission member 220, if a single driving source is used, that is, only the second driving unit 400 is used for driving, relative movement between the telescopic mechanism 200 and the apparatus body 100 may be implemented, and relative movement between the hook mechanism 300 and the telescopic mechanism 200 may be implemented, thereby improving compactness and transmission efficiency of an overall structure of the retrieving or placing apparatus 10.

In some embodiments, a buffer pad may be disposed on a side of the abutment member 240 that faces the hook mechanism 300. The buffer pad has elasticity, to reduce an impact force and prevent the impact force from being transmitted to the telescopic mechanism 200, thereby improving stability of a retrieving or placing process.

For example, the buffer pad may be made of a material, including, but not limited to, rubber, silica gel, sponge, or the like. This is not specifically limited in this embodiment of this application.

A specific arrangement position and transmission manner of the transmission wheel 230 are described below.

In some embodiments, there may be two transmission wheels 230 that cooperate with one transmission member 220. The two transmission wheels 230 are respectively rotatably connected to the two ends of the telescopic member 210 in the X-direction, and the transmission member 220 winds around the two transmission wheels 230.

In some other embodiments, there may be six transmission wheels 230, and three transmission wheels 230 are disposed at each of the two ends of the telescopic member 210 in the X-direction. In the three transmission wheels 230 at one end of the telescopic member 210, and two of the three transmission wheels 230 are inner transmission wheels 230. The inner transmission wheels 230 are abutted against the inner side of the transmission member 220. One transmission wheel 230 is an outer transmission wheel 230, abutted against an outer side of the transmission member 220. The outer transmission wheel 230 is located between the two inner transmission wheels 230.

It should be noted that, in this embodiment of this application, a disposition manner of another quantity of the transmission wheels 230 may alternatively be used, provided that the transmission member 220 can form a closed loop, and the hook mechanism 300 is driven to move when the transmission member 220 is driven around the transmission wheel 230. A specific disposition quantity of the transmission wheels 230 is not limited in this embodiment of this application.

In a possible implementation, a first guide rail 110 may be disposed on the apparatus body 100, a first slide block 250 is connected to the telescopic member 210, and the first slide block 250 is slidably connected to the first guide rail 110, to improve movement smoothness of the telescopic member 210 relative to the apparatus body 100. The first guide rail 110 extends in the X-direction.

For example, there may be two first guide rails 110. The two first guide rails 110 may be parallel and are respectively disposed on two opposite sides of the apparatus body 100. The first slide block 250 may be disposed on each of two opposite sides of a bottom of the telescopic member 210, and at least one first slide block 250 is disposed on each side and is in sliding cooperation with the first guide rail 110.

In a possible implementation, a second guide rail 260 may be disposed on the telescopic member 210, a second slide block 370 is connected to the mounting base 310, and the second slide block 370 is slidably connected to the second guide rail 260, thereby improving movement smoothness of the hook mechanism 300 relative to the telescopic mechanism 200. The second guide rail 260 extends in the X-direction.

For example, there may be two second guide rails 260. The two second guide rails 260 may be parallel and are respectively disposed on two opposite sides of a surface of the telescopic member 210. The second slide block 370 may be disposed on each of two opposite sides of a bottom of the hook mechanism 300, and at least one second slide block 370 is disposed on each side and is in sliding cooperation with the second guide rail 260.

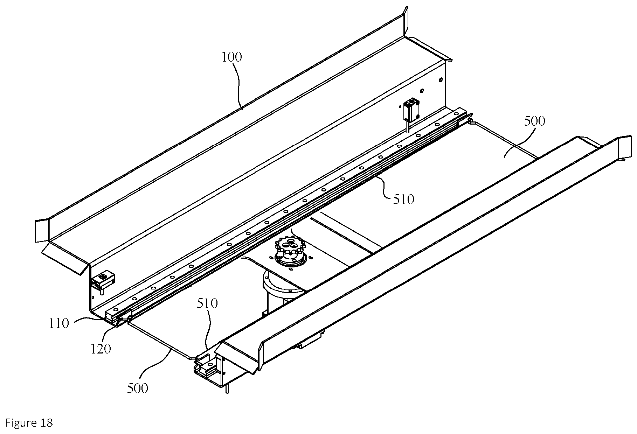

FIG. 17 is a schematic diagram of a bottom side of a retrieving or placing apparatus according to an embodiment of this application. FIG. 18 is a schematic diagram of an apparatus body of a retrieving or placing apparatus according to an embodiment of this application.

Refer to FIG. 12 to FIG. 18. In a possible implementation, the retrieving or placing apparatus 10 may further include an elastic member 510 and at least two hanging shafts 500. A first hanging portion 120 is disposed at each of two ends of the apparatus body 100 in the first direction, and the at least two hanging shafts 500 are respectively opposite to the first hanging portions 120 at the two ends of the apparatus body 100. The at least two hanging shafts 500 are located at the two ends of the apparatus body 100, and the hanging shaft 500 is abutted against the first hanging portion 120 at a same end. Two ends of the elastic member 510 are respectively connected to the hanging shafts 500 at the two ends of the apparatus body 100. The hanging shaft 500 may be disposed for blocking at an end portion of the telescopic member 210.

It may be understood that, when the hook mechanism 300 is moved between the two ends of the telescopic mechanism 200, the position of the telescopic mechanism 200 may be limited by using the hanging shaft 500, to prevent the telescopic mechanism 200 from being offset relative to the apparatus body 100.

For example, the elastic member 510 is a spring.

In some embodiments, a second hanging portion 211 is disposed at each of the two ends of the telescopic member 210 in the first direction, and the at least two hanging shafts 500 are respectively located at the two ends of the telescopic member 210.

In an implementation, the elastic member 510 may be a tension spring. When the telescopic member 210 extends out relative to the apparatus body 100, the hanging shaft 500 located at an extending end of the telescopic member 210 is abutted against the second hanging portion 211, and the hanging shaft 500 located at an end facing away from the extending end of the telescopic member 210 is abutted against the first hanging portion 120. In this way, the elastic member 510 is tensioned. Therefore, when the hook mechanism 300 is moved to an end portion of the telescopic mechanism 200 and synchronously extends and retracts with the telescopic mechanism 200, the hook mechanism 300 and the telescopic mechanism 200 may be maintained in an abutted state, and a relative position between the hook mechanism 300 and the telescopic mechanism 200 remains stable.

In another implementation, the elastic member 510 may be a compression spring. When the telescopic member 210 extends out relative to the apparatus body 100, the hanging shaft 500 located at an end facing away from an extending end of the telescopic member 210 is abutted against the second hanging portion 211, and the hanging shaft 500 located at the extending end of the telescopic member 210 is abutted against the first hanging portion 120. In this way, the elastic member 510 is compressed, to maintain an abutted state of the hook mechanism 300 and the telescopic mechanism 200, and maintain a stable relative position of the hook mechanism 300 and the telescopic mechanism 200.

For example, the first hanging portion 120 and the second hanging portion 211 may each be provided with a mounting slot. The hanging shaft 500 may be disposed in the Y-direction. The mounting slots of the first hanging portion 120 and the second hanging portion 211 are oriented to a same side. When the elastic member 510 may be a tension spring, the mounting slots of the first hanging portion 120 and the second hanging portion 211 are oriented to an outer side of an end portion of the apparatus body 100. In other words, the hanging shaft 500 is disposed for blocking on a side of the corresponding first hanging portion 120 and second hanging portion 211 that faces an exterior of the apparatus body 100. When the elastic member 510 may be a compression spring, the mounting slots of the first hanging portion 120 and the second hanging portion 211 are oriented to an inner side of an end portion of the apparatus body 100. In other words, the hanging shaft 500 is disposed for blocking on a side of the corresponding first hanging portion 120 and second hanging portion 211 that faces an interior of the apparatus body 100.

In a possible implementation, the hook mechanism 300 may further include a detection unit 380, and the detection unit 380 is connected to the mounting base 310. The detection unit 380 is configured to detect a relative position of the hook mechanism 300 and the container 20, to ensure accuracy of a docking position of the hook member 330 and the container 20.

For example, the detection unit 380 may be a photoelectric sensor, and the detection unit 380 may detect a distance between the hook mechanism 300 and a bottom surface of the container 20. When the hook mechanism 300 is opposite to the docking slot 21 of the container 20, the distance detected by the detection unit 380 is a preset distance between the hook mechanism 300 and a bottom of the docking slot 21, or a signal detected by the detection unit 380 is suddenly changed. A specific detection manner is not limited herein. In this way, it is determined that the hook mechanism 300 has been moved to a preset position opposite to the docking slot 21.

It should be noted that, a bearing surface 101 may be disposed on the apparatus body 100, the bearing surface 101 may be connected to two opposite sides of the apparatus body 100, and a height of the bearing surface 101 is higher than the position of the telescopic mechanism 200.

In addition, a first detection module and a second detection module may be further disposed on the apparatus body 100. The first detection module may detect a position of the container 20 relative to the apparatus body 100, to determine whether the container 20 has been completely retrieved and placed to the bearing surface 101 of the apparatus body 100, or whether the container 20 has been completely removed from the apparatus body 100. The second detection module is configured to detect a height position of the retrieving or placing apparatus 10 relative to the rack, to ensure that the retrieving or placing apparatus 10 is opposite to a target storage location at which the container 20 needs to be retrieved and placed. The first detection module and the second detection module may both be photoelectric sensors. This is not specifically limited in this embodiment of this application.

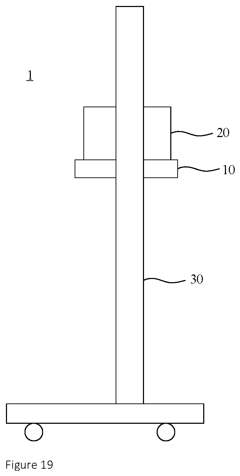

FIG. 19 is a schematic diagram of a robot 1 according to an embodiment of this application.

Refer to FIG. 19. An embodiment of this application provides a robot 1. The robot 1 includes a robot body 30 and the retrieving or placing apparatus 10 in the foregoing technical solution, the retrieving or placing apparatus 10 is disposed on the robot body 30, and the retrieving or placing apparatus 10 can be moved up and down in a height direction of the robot body 30.

The robot 1 is used in a warehousing system, may be moved between racks of the warehousing system and/or moved up and down along the rack, and obtain a container 20 from the rack or place a container 20 on the rack, to retrieve, place, and transfer the container 20.

In some embodiments, the retrieving or placing apparatus 10 may be lifted relative to the robot body 30, and the robot body 30 may be moved on the ground and/or moved up and down along the rack, so that the retrieving or placing apparatus 10 may be docked with different storage locations of the rack, to obtain a target container 20. After the retrieving or placing apparatus 10 is docked with a corresponding storage location of the rack, a retrieving or placing operation of the container 20 may be performed.

It should be noted that, the robot 1 provided in this embodiment of this application may include all the technical solutions and technical effects of the retrieving or placing apparatus 10. Details are not described herein again.

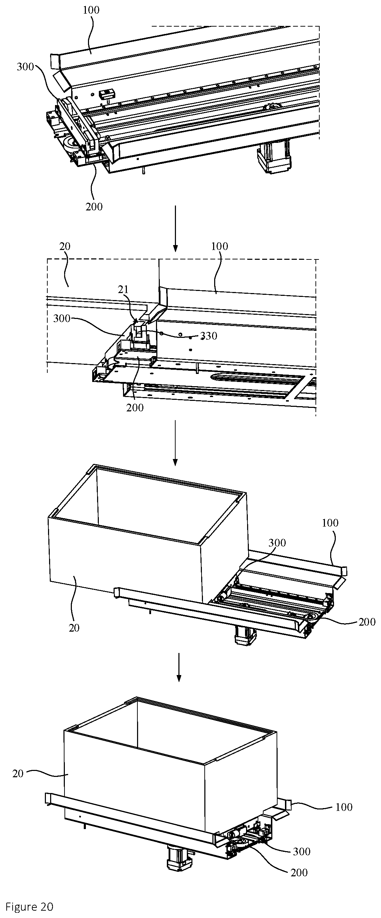

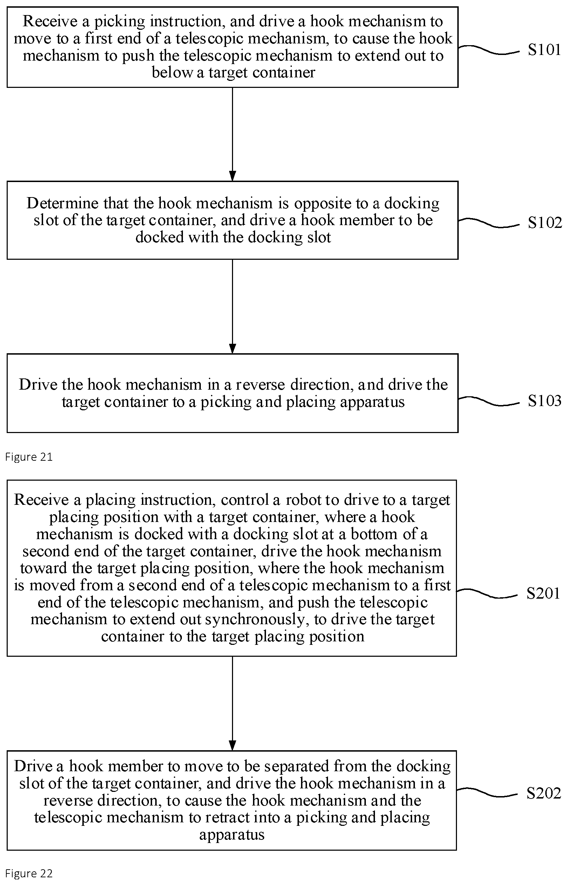

FIG. 20 is a schematic diagram of a retrieving process of a retrieving or placing apparatus according to an embodiment of this application. FIG. 21 is a flowchart of a retrieving method according to an embodiment of this application.

Refer to FIG. 20 and FIG. 21. This application provides a retrieving method applied to a robot 1. The robot 1 includes a retrieving or placing apparatus 10, a receiver, a processor, and a memory. The retrieving or placing apparatus 10 includes an apparatus body 100, a telescopic mechanism 200, and a hook mechanism 300. The hook mechanism 300 is movably connected to the telescopic mechanism 200; the hook mechanism 300 includes a mounting base 310, a first driving unit 320, and a hook member 330; and the apparatus body 100 includes a bearing surface 101, the bearing surface 101 is configured to bear a container 20, a height of the hook member 330 is higher than that of the bearing surface 101 when the hook member 330 is docked with a docking slot 21 of the container 20, and the height of the hook member 330 is lower than that of the bearing surface 101 when the hook member 330 is separated from the docking slot 21 of the container 20. The memory stores computer-executable program codes for executing various tasks. After the receiver receives instructions sent by a server, the processor executes the program codes, to control the robot 1 and various execution mechanisms (for example, the retrieving or placing apparatus 10) of the robot 1 to perform corresponding actions.

In an embodiment, the retrieving method includes the following steps.

S101: Receive a retrieving instruction, and drive the hook mechanism 300 to move to a first end of the telescopic mechanism 200, to cause the hook mechanism 300 to push the telescopic mechanism 200 to extend out to below a target container 20.

It should be noted that, a sequence of the robot 1 traveling to a target retrieving position and driving the hook mechanism 300 to move to the first end of the telescopic mechanism 200 is not limited, and may be sequentially performed, or may be simultaneously performed. For example, the hook mechanism 300 may be driven to move to the first end of the telescopic mechanism 200 in a process of traveling to the target retrieving position, or the hook mechanism 300 may be driven to move to the first end of the telescopic mechanism 200 after the target retrieving position is reached, or the hook mechanism 300 may be driven to move to the first end of the telescopic mechanism 200 while the target retrieving position is reached. The first end of the telescopic mechanism 200 is an end close to the target retrieving position, and a second end of the telescopic mechanism 200 is an end away from the target retrieving position.

Specifically, the hook mechanism 300 is first moved relative to the telescopic mechanism 200. In a process in which the hook mechanism 300 is moved to the first end of the telescopic mechanism 200, a position of the telescopic mechanism 200 remains fixed. After the hook mechanism 300 is moved to the first end of the telescopic mechanism 200, the hook mechanism is abutted against an end portion of the telescopic mechanism 200, a relative position of the hook mechanism 300 and the telescopic mechanism 200 remains unchanged, and the hook mechanism 300 and the telescopic mechanism 200 extend out together relative to the apparatus body 100.

S102: Determine that the hook mechanism 300 is opposite to the docking slot 21 of the target container 20, and drive the hook member 330 to be docked with the docking slot 21.

It may be understood that, in an embodiment, a bottom of the target container 20 has the docking slot 21, and a slot opening of the docking slot 21 faces downward. When the hook mechanism 300 is opposite to the docking slot 21, the hook member 330 is located below the docking slot 21. It should be noted that, an example in which the slot opening of the docking slot 21 faces downward is only used herein for description. The slot opening of the docking slot 21 may alternatively face upward. Details are not described herein again.

The hook mechanism 300 may further include a detection unit 380.

The determining that the hook mechanism 300 is opposite to the docking slot 21 of the target container 20 specifically includes the following steps.

S1021: Determine that the hook mechanism 300 is opposite to the docking slot 21 when the detection unit 380 detects the docking slot 21.

It should be noted that, the detection unit 380 may be a photoelectric sensor, and the detection unit 380 may detect a distance between the hook mechanism 300 and a bottom surface of the container 20. When the hook mechanism 300 is opposite to the docking slot 21 of the container 20, the distance detected by the detection unit 380 is a preset distance between the hook mechanism 300 and a bottom of the docking slot 21, or a signal detected by the detection unit 380 is suddenly changed. A specific detection manner is not limited herein. In this way, it is determined that the hook mechanism 300 has been moved to a preset position opposite to the docking slot 21. In this case, the hook member 330 may be driven to rotate, so that the hook member 330 is docked with the docking slot 21.

S103: Drive the hook mechanism 300 in a reverse direction, to drive the target container 20 to the retrieving or placing apparatus 10.

In a process in which the hook mechanism 300 drives the container 20 to the retrieving or placing apparatus 10, the hook mechanism 300 and the telescopic mechanism 200 are first driven to retract synchronously, to drive a part of the target container 20 to the retrieving or placing apparatus 10. In this process, the telescopic mechanism 200 is moved from an extended state to an initial state.

Subsequently, the hook mechanism 300 is driven to move from the first end of the telescopic mechanism 200 to the second end of the telescopic mechanism 200, to drive the entire target container 20 to the retrieving or placing apparatus 10. In this process, the position of the telescopic mechanism 200 remains fixed relative to the apparatus body 100, while the hook mechanism 300 is moved relative to the telescopic mechanism 200.

FIG. 22 is a flowchart of a placing method according to an embodiment of this application.

Refer to FIG. 22. An embodiment of this application provides a placing method applied to a robot 1. The robot 1 includes a retrieving or placing apparatus 10. The retrieving or placing apparatus 10 includes an apparatus body 100, a telescopic mechanism 200, and a hook mechanism 300. The hook mechanism 300 is movably connected to the telescopic mechanism 200. The hook mechanism 300 includes a mounting base 310, a first driving unit 320, and a hook member 330. The apparatus body 100 includes a bearing surface 101, the bearing surface 101 is configured to bear a container 20, a height of the hook member 330 is higher than that of the bearing surface 101 when the hook member 330 is docked with a docking slot 21 of the container 20, and the height of the hook member 330 is lower than that of the bearing surface 101 when the hook member 330 is separated from the docking slot 21 of the container 20. In addition, the robot 1 further includes a receiver, a processor, and a memory. Refer to the foregoing description of the embodiment corresponding to FIG. 21. Details are not described herein again.

The placing method includes the following steps.

S201: Receive a placing instruction, control the robot 1 to travel to a target placing position with a target container 20, where the hook mechanism 300 is docked with a docking slot at a bottom of a second end of the target container 20, drive the hook mechanism 300 toward the target placing position, where the hook mechanism 300 is moved from a second end of the telescopic mechanism 200 to a first end of the telescopic mechanism 200, and push the telescopic mechanism 200 to extend out synchronously, to drive the target container 20 to the target placing position.

The first end of the telescopic mechanism 200 is an end close to the target placing position, the second end of the telescopic mechanism 200 is an end away from the target placing position, a first end of the target container 20 is an end close to the target placing position, and the second end of the target container 20 is an end away from the target placing position.

It should be noted that, when the robot 1 obtains a target container 20 from a rack, the target container 20 may enter the retrieving or placing apparatus 10 from an end of the telescopic mechanism 200; and when the robot 1 places the target container on the rack, the target container may enter the rack from a same end or an other end of the telescopic mechanism 200. This is not limited in this application.

When the hook mechanism 300 starts to drive the target container 20 to move, that is, starts to place the target container 20 at the target placing position, the hook mechanism 300 is first moved from an end of the telescopic mechanism 200 to an other end. In this process, a position of the telescopic mechanism 200 remains fixed, and a part of the target container 20 leaves the retrieving or placing apparatus 10. Subsequently, the hook mechanism 300 and the telescopic mechanism 200 extend out together, the hook mechanism 300 drives the container 20 to completely leave the retrieving or placing apparatus 10, and the container 20 is placed in a storage location of the rack.

In an embodiment, the controlling the robot to travel to a target placing position with a target container 20, where the hook mechanism 300 is docked with a docking slot 21 of a bottom of a second end of the target container 20 specifically includes the following steps.

S2011: Control the robot 1 to move to the target placing position, move the hook mechanism 300 to the second end of the telescopic mechanism 200 if a placing direction of the target container 20 and a retrieving direction of the target container 20 are on different sides of the retrieving or placing apparatus 10, and drive the hook member 330 to move to be docked with the docking slot 21 of the bottom of the second end of the target container 20.

It may be understood that before the hook mechanism 300 is driven toward the target placing position, if a same-side placing instruction is received, that is, the placing direction of the target container 20 and the retrieving direction of the target container 20 are on a same side of the retrieving or placing apparatus 10, the target container 20 is retrieved and placed on the same side. The hook member 330 may be directly rotated to be docked with the docking slot 21 of the target container 20 or to maintain docking between the hook member 330 and the docking slot 21 of the target container 20 when the robot 1 obtains the target container 20. If an opposite-side placing instruction is received, that is, the placing direction of the target container 20 and the retrieving direction of the target container 20 are on different sides of the retrieving or placing apparatus 10, the target container 20 is retrieved and placed on different sides. The hook mechanism 300 may be first moved to the second end of the telescopic mechanism 200, and then the hook member 330 is rotated to be docked with the docking slot 21 of the target container 20.

It should be noted that, the two actions, namely, controlling the robot 1 to move and adjusting a position of the hook mechanism 330, may be performed one after the other or performed synchronously. This is not specifically limited in this embodiment of this application.

S202: Drive the hook member 330 to move to be separated from the docking slot 21 of the target container 20; and drive the hook mechanism 300 in a reverse direction, to cause the hook mechanism 300 and the telescopic mechanism 200 to retract into the retrieving or placing apparatus 10.

After the target container 20 is completely placed in the storage location of the rack, the hook member 330 may be separated from the docking slot 21, and the hook mechanism 300 and the telescopic mechanism 200 are retracted. In a process of retracting the telescopic mechanism 200, the hook mechanism 300 and the telescopic mechanism 200 may move synchronously, until the telescopic mechanism 200 returns to an initial position.

In addition, the foregoing placing method and retrieving method may be implemented one after the other. For example, a container 20 is first obtained from a rack by using the foregoing retrieving method, and then the container 20 is placed on the rack by using the foregoing placing method. Alternatively, a container 20 is first placed on a rack by using the foregoing placing method, and then the container 20 is obtained from the rack by using the foregoing retrieving method.

For example, a warehousing system includes two oppositely disposed racks. The robot 1 retrieves and places goods in a lane between the two racks. A first storage location and a second storage location are two storage locations that are oppositely disposed on the two racks. The robot 1 obtains the container 20 at the first storage location by using the retrieving method, and then continues to place the container 20 at the second storage location by using the placing method without rotating or lifting. In this way, a position of the container 20 can be adjusted conveniently, an action is simple, and a process is quick.

It should be noted that, the retrieving or placing apparatus 10 mentioned in the foregoing retrieving method and placing method may be any one or a combination of several types of the retrieving or placing apparatuses 10 provided in the embodiments of this application, provided that the retrieving or placing apparatus 10 includes a structure necessary for implementing the foregoing retrieving method and/or placing method.

An embodiment of this application provides a warehousing system, including a rack and a robot 1. The robot 1 may retrieve a container from a rack and place a container on the rack. The robot 1 is configured to perform the foregoing retrieving method or placing method.

Finally, it should be noted that, the foregoing embodiments are merely used for illustrating, but are not intended to limit, the technical solutions of this application. It should be understood by a person of ordinary skill in the art that although this application has been described in detail with reference to the foregoing embodiments, modifications can be made to the technical solutions described in the foregoing embodiments, or equivalent substitutions can be made to some or all of the technical features. These modifications or replacements do not cause the essence of corresponding technical solutions to depart from the scope of the technical solutions of the embodiments of this application.

## Claims

1. A retrieving or placing apparatus, configured to retrieve or place a container and comprising: an apparatus body, a telescopic mechanism, and a hook mechanism;
wherein the telescopic mechanism is movably connected to the apparatus body, and the hook mechanism is movably connected to the telescopic mechanism, the hook mechanism comprises a mounting base, a first driving unit, and a hook member, the first driving unit is disposed on the mounting base, and the hook member is movably connected to the mounting base, and the first driving unit is configured to drive the hook member to move relative to the mounting base, to cause the hook member to be docked with or separated from a docking slot of the container; and
wherein the apparatus body comprises a bearing surface, the bearing surface is configured to bear the container, a height of the hook member is higher than that of the bearing surface when the hook member is docked with the docking slot of the container, and the height of the hook member is lower than that of the bearing surface when the hook member is separated from the docking slot of the container.

2. The retrieving or placing apparatus according to claim 1, wherein at least one end of a bottom of the container has the docking slot; and the hook member is rotatably connected to the mounting base, and the hook member is at least partially inserted into the docking slot when the hook member is rotated to be docked with the container.

3. The retrieving or placing apparatus according to claim 2, wherein a rotation plane of the hook member is parallel to an extension direction of the docking slot.

4. The retrieving or placing apparatus according to any one of claims 1 to 3, wherein the first driving unit has an output shaft, and the hook member is connected to the output shaft.

5. The retrieving or placing apparatus according to any one of claims 1 to 3, wherein at least two hook members are provided, and at least two first driving units are provided, and the hook members are disposed in one-to-one correspondence with the first driving units.

6. The retrieving or placing apparatus according to any one of claims 1 to 3, wherein the hook mechanism further comprises a link member, the hook member is rotatably connected to the mounting base through a rotary shaft, a first end of the link member is connected to the first driving unit, and a second end of the link member is connected to the hook member, and the second end of the link member and a rotation center of the hook member are spaced apart.

7. The retrieving or placing apparatus according to claim 6, wherein the first driving unit has an output shaft, a driving member is connected to the output shaft, the first end of the link member is connected to the driving member, and the first end of the link member and a rotation center of the output shaft are spaced apart.

8. The retrieving or placing apparatus according to claim 7, wherein the link member comprises a link body and a bending portion connected to the link body, the link body is connected to the hook member, and the bending portion is connected to the driving member.

9. The retrieving or placing apparatus according to claim 7, wherein two hook members and two link members are provided, the two hook members are located at two ends of the mounting base, and the driving member is located between the two hook members; and positions of connections between the two link members and the driving member are respectively located on two opposite sides of the output shaft.

10. The retrieving or placing apparatus according to any one of claims 1 to 3, further comprising a second driving unit and a driving wheel;
wherein the telescopic mechanism comprises a telescopic member, a transmission member, and at least two transmission wheels, the at least two transmission wheels are respectively disposed at two ends of the telescopic member in a first direction, and the transmission member winds around the transmission wheel, and the hook mechanism is connected to the transmission member; and
wherein the second driving unit is disposed in the apparatus body, the second driving unit is configured to drive the driving wheel to rotate, and the driving wheel cooperates with the transmission member and drives the transmission member to transmit around the transmission wheel, to cause the hook mechanism to move relative to the telescopic member.

11. The retrieving or placing apparatus according to claim 10, wherein the transmission member forms a closed loop around the at least two transmission wheels, and the driving wheel is located on an inner side of the transmission member, and is engaged with the transmission member.

12. The retrieving or placing apparatus according to claim 10, wherein the telescopic member is slidably connected to the apparatus body, an abutment member is disposed at each of the two ends of the telescopic member in the first direction, and the driving wheel drives the telescopic mechanism to move relative to the apparatus body when the hook mechanism is moved to any one of the two ends of the telescopic member in the first direction and is abutted against the abutment member.

13. The retrieving or placing apparatus according to claim 10, wherein a first guide rail is disposed on the apparatus body, a first slide block is connected to the telescopic member, and the first slide block is slidably connected to the first guide rail; and/or
a second guide rail is disposed on the telescopic member, a second slide block is connected to the mounting base, and the second slide block is slidably connected to the second guide rail.

14. The retrieving or placing apparatus according to claim 10, further comprising an elastic member and at least two hanging shafts, a first hanging portion is disposed at each of two ends of the apparatus body in the first direction, and the at least two hanging shafts are respectively located at the two ends of the apparatus body, the hanging shaft is abutted against the first hanging portion at a same end, two ends of the elastic member are respectively connected to the hanging shafts at the two ends of the apparatus body, and the hanging shaft is disposed for blocking at an end portion of the telescopic member.

15. The retrieving or placing apparatus according to claim 14, wherein the elastic member is a tension spring, a second hanging portion is disposed at each of the two ends of the telescopic member in the first direction, and the at least two hanging shafts are respectively located at the two ends of the telescopic member, and when the telescopic member extends out relative to the apparatus body, the hanging shaft located at an extending end of the telescopic member is abutted against the second hanging portion, and the hanging shaft located at an end facing away from the extending end of the telescopic member is abutted against the first hanging portion.

16. The retrieving or placing apparatus according to claim 14, wherein the elastic member is a compression spring, a second hanging portion is disposed at each of the two ends of the telescopic member in the first direction, and the at least two hanging shafts are respectively located at the two ends of the telescopic member, and when the telescopic member extends out relative to the apparatus body, the hanging shaft located at an end facing away from an extending end of the telescopic member is abutted against the second hanging portion, and the hanging shaft located at the extending end of the telescopic member is abutted against the first hanging portion.

17. The retrieving or placing apparatus according to any one of claims 1 to 3, wherein the hook mechanism further comprises a detection unit, wherein the detection unit is connected to the mounting base, and the detection unit is configured to detect a relative position of the hook mechanism and the container.

18. A robot, comprising a robot body and the retrieving or placing apparatus according to any one of claims 1 to 17, wherein the retrieving or placing apparatus is disposed in the robot body, and the retrieving or placing apparatus is capable of being moved up and down in a height direction of the robot body.

19. A retrieving method applied to a robot, the robot comprising a retrieving or placing apparatus, wherein the retrieving or placing apparatus comprises an apparatus body, a telescopic mechanism, and a hook mechanism, and the hook mechanism is movably connected to the telescopic mechanism, the hook mechanism comprises a mounting base, a first driving unit, and a hook member, the first driving unit is disposed on the mounting base, the hook member is movably connected to the mounting base, and the first driving unit is configured to drive the hook member to move relative to the mounting base, and the apparatus body comprises a bearing surface, the bearing surface is configured to bear a container, a height of the hook member is higher than that of the bearing surface when the hook member is docked with a docking slot of the container, and the height of the hook member is lower than that of the bearing surface when the hook member is separated from the docking slot of the container; and wherein the retrieving method comprises:
receiving a retrieving instruction, and driving the hook mechanism to move to a first end of the telescopic mechanism, to cause the hook mechanism to push the telescopic mechanism to extend out to below a target container;
determining that the hook mechanism is opposite to a docking slot of the target container, and driving the hook member to move to be docked with the docking slot, wherein the docking slot is located on a bottom side of an end portion of the target container; and
driving the hook mechanism in a reverse direction, to drive the target container to the retrieving or placing apparatus.

20. The retrieving method according to claim 19, wherein the hook mechanism further comprises a detection unit; and
the determining that the hook mechanism is opposite to the docking slot of the target container comprises:
determining that the hook mechanism is opposite to the docking slot when the detection unit detects the docking slot.

21. The retrieving method according to claim 19, wherein the driving the hook mechanism in the reverse direction, to drive the target container to the retrieving or placing apparatus comprises:
driving the hook mechanism and the telescopic mechanism to retract synchronously, to drive a part of the target container to the retrieving or placing apparatus; and
driving the hook mechanism to move from the first end of the telescopic mechanism to a second end of the telescopic mechanism, to drive the entire target container to the retrieving or placing apparatus.

22. A placing method applied to a robot, the robot comprising a retrieving or placing apparatus, wherein the retrieving or placing apparatus comprises an apparatus body, a telescopic mechanism, and a hook mechanism, and the hook mechanism is movably connected to the telescopic mechanism, the hook mechanism comprises a mounting base, a first driving unit, and a hook member, the first driving unit is disposed on the mounting base, the hook member is movably connected to the mounting base, and the first driving unit is configured to drive the hook member to move relative to the mounting base, the apparatus body comprises a bearing surface, the bearing surface is configured to bear a container, a height of the hook member is higher than that of the bearing surface when the hook member is docked with a docking slot of the container, and the height of the hook member is lower than that of the bearing surface when the hook member is separated from the docking slot of the container; and
wherein the placing method comprises:
receiving a placing instruction; controlling the robot to travel to a target placing position with a target container, wherein the hook mechanism is docked with a docking slot at a bottom of a second end of the target container; driving the hook mechanism toward the target placing position, wherein the hook mechanism is moved from a second end of the telescopic mechanism to a first end of the telescopic mechanism; and pushing the telescopic mechanism to extend out synchronously, to drive the target container to the target placing position; and
driving the hook member to move to be separated from the docking slot of the target container; and driving the hook mechanism in a reverse direction, to cause the telescopic mechanism to retract into the retrieving or placing apparatus.

23. The placing method according to claim 22, wherein the controlling the robot to travel to the target placing position with the target container, wherein the hook mechanism is docked with the docking slot at the bottom of the second end of the target container comprises:
controlling the robot to move to the target placing position, moving the hook mechanism to the second end of the telescopic mechanism if a placing direction of the target container and a retrieving direction of the target container are on different sides of the retrieving or placing apparatus, and driving the hook member to move to be docked with the docking slot at the bottom of the second end of the target container.

24. A warehousing system, comprising a rack and a robot, wherein the robot is capable of retrieving a container from the rack and placing the container on the rack, and the robot is configured to perform the retrieving method according to any one of claims 19 to 21 or the placing method according to claim 22 or 23.
